# EUROPEAN PATENT APPLICATION

(11) **EP 4 648 150 A1**
(43) Date of publication of application: **12.11.2025**
(21) Application number: 24738663.4
(22) Date of filing: 02.01.2024
(51) Int. Cl.: H01M 10/04

(54) **ELECTRODE SUPPLY DEVICE, ELECTRODE ASSEMBLY MANUFACTURING DEVICE USING SAME, ELECTRODE SUPPLY METHOD, AND ELECTRODE ASSEMBLY MANUFACTURING METHOD USING SAME**

(30) Priority: 03.01.2023 KR 20230000693; 22.12.2023 KR 20230189250
(71) Applicant: LG Energy Solution, Ltd., Seoul 07335 (KR)
(72) Inventor: CHOI, Jongkwan, Daejeon 34122 (KR); KIM, Nam Young, Daejeon 34122 (KR); KIM, Yong Nam, Daejeon 34122 (KR); KIM, Jong Seok, Daejeon 34122 (KR); YOON, Se Hyun, Daejeon 34122 (KR); LEE, Ju Young, Daejeon 34122 (KR)
(74) Representative: Goddar, Heinz J.
(86) International application number: PCT/KR2024/000028
(87) International publication number: WO 2024/147592

(57) **Abstract**

An object of the present invention is to provide an electrode supply device, an electrode assembly manufacturing apparatus using the same, an electrode supply method, and an electrode assembly manufacturing method using the same.

## Description

### [Technical Field]

The present application claims priority to and the benefit of Korean Patent Application No. 10-2023-0000693 filed with the Korean Intellectual Property Office on January 3, 2023, and Korean Patent Application No. 10-2023-0189250 filed with the Korean Intellectual Property Office on December 22, 2023, the entire contents of which are incorporated herein by reference.

The present invention relates to an electrode supply device, an electrode assembly manufacturing apparatus using the same, an electrode supply method, and an electrode assembly manufacturing method using the same.

### [Background Art]

Unlike primary batteries, secondary batteries may be rechargeable and have small scales and high capacities. Recently, research and development have been actively conducted on the secondary batteries. As development of technologies and demands for mobile devices have increased, there is a rapidly increasing demand for rechargeable batteries as energy sources.

The secondary batteries are classified into coin batteries, cylindrical batteries, angular batteries, and pouch-type batteries depending on shapes of battery casings. In the secondary battery, an electrode assembly mounted in the battery casing is a power generation element that has a structure made by stacking electrodes and separators and may be charged and discharged.

The electrode assemblies may be approximately classified into a Jelly-roll-type electrode assembly made by winding sheet-shaped positive and negative electrodes coated with active materials with a separator interposed therebetween, a stack-type electrode assembly made by sequentially stacking a plurality of positive and negative electrodes in a state in which separators are interposed between the plurality of positive and negative electrodes, and a stack-and-folding-type electrode assembly made by winding stack-type unit cells by using long separation films.

The electrode assemblies are mostly manufactured by using separate electrodes supplied from a magazine in which a plurality of sheet electrodes is stacked. During this process, the electrode, which is intended to be supplied among the plurality of sheet electrodes stacked in the magazine, is not properly separated, which causes defects in the manufactured electrode assemblies.

Accordingly, there is a need for a technology to appropriately separate electrodes that are intended to be supplied among a plurality of electrodes stacked in the magazine.

### [Detailed Description of the Invention]

### [Technical Problem]

An object of the present invention is to provide an electrode supply device, an electrode assembly manufacturing apparatus using the same, an electrode supply method, and an electrode assembly manufacturing method using the same.

### [Technical Solution]

An embodiment of the present invention provides an electrode supply device including: a magazine part in which a plurality of electrodes is stacked; an electrode pick-up part configured to pick up a first electrode disposed at an uppermost side among the plurality of electrodes and transfer the first electrode to a stack table; and an air supply part configured to inject air toward an upper surface of the first electrode and a lower surface of a second electrode, which adjoins the first electrode, to reduce a pressure on the upper surface of the first electrode and the lower surface of the second electrode.

Another embodiment of the present invention provides an electrode assembly manufacturing apparatus, which manufactures an electrode assembly in which positive and negative electrodes are alternately disposed between folded separators, the electrode assembly manufacturing apparatus including: a positive electrode supply part configured to supply the positive electrode to a stack table; a negative electrode supply part configured to supply the negative electrode to the stack table; a separator supply part configured to supply the separator to the stack table; the stack table on which a stack, which is made by stacking the positive electrode, the separator, and the negative electrode in a shape in which the positive and negative electrodes are alternately disposed between the folded separators, is manufactured; and a pressing part configured to manufacture an electrode assembly by bonding the positive electrode, the separator, and the negative electrode by heating and pressing the stack, in which at least one of the positive electrode supply part and the negative electrode supply part includes the electrode supply device.

Another embodiment of the present invention provides an electrode supply method including: lowering a pressure on an upper surface of a first electrode, which is disposed at an uppermost side among a plurality of electrodes stacked in a magazine part, and a pressure on a lower surface of a second electrode adjoining the first electrode by injecting air toward the upper surface of the first electrode and the lower surface of the second electrode; and picking up the first electrode.

Lastly, another embodiment of the present invention provides an electrode assembly manufacturing method, which manufactures an electrode assembly in which positive and negative electrodes are alternately disposed between folded separators, the electrode assembly manufacturing method including: supplying the positive electrode to a stack table; supplying the negative electrode to the stack table; supplying the separator to the stack table; manufacturing a stack by stacking the positive electrode, the separator, and the negative electrode on a stack table in a shape in which the positive and negative electrodes are alternately disposed between the folded separators; and manufacturing an electrode assembly by bonding the positive electrode, the separator, and the negative electrode by heating and pressing the stack, in which at least one of the supplying of the positive electrode to the stack table and the supplying of the negative electrode to the stack table includes the electrode supply method.

### [Advantageous Effects]

According to the electrode supply method, the electrode supply device, the electrode assembly manufacturing apparatus using the device, and the electrode assembly manufacturing method using the method according to the embodiment of the present invention, it is possible to prevent two electrodes not being separated caused by the contact between the electrode surface and the electrode surface or the contact between the electrode surface and the separator.

According to the electrode supply method, the electrode supply device, the electrode assembly manufacturing apparatus using the device, and the electrode assembly manufacturing method using the method according to the embodiment of the present invention, it is possible to improve productivity by preventing two electrodes not being separated.

In addition, the secondary battery manufactured by using the electrode supply device, the electrode assembly manufacturing apparatus, and the electrode assembly manufacturing method have excellent performance. In particular, the electrode assembly is excellent in performance in terms of safety.

### [Brief Description of Drawings]

FIG. 1 is a view illustrating a process of separating an electrode in an electrode supply device and an electrode supply method according to an embodiment of the present invention.
FIG. 2 is a top plan view exemplarily illustrating an electrode assembly manufacturing apparatus according to the embodiment of the present invention.
FIG. 3 is a front view illustrating a concept of the electrode assembly manufacturing apparatus according to the embodiment of the present invention.
FIG. 4 is a cross-sectional view exemplarily illustrating a typical electrode assembly.
FIG. 5 is a conceptual view illustrating a pressing process in an electrode assembly manufacturing method or an electrode assembly manufacturing apparatus according to the embodiment of the present invention.
FIG. 6A is a perspective view illustrating a first pressing part 50 according to the embodiment of the present invention, and FIG. 6B is a perspective view illustrating a second pressing part 60 according to the embodiment of the present invention.
FIG. 7 is a perspective view illustrating a stack table of the electrode assembly manufacturing apparatus according to the embodiment of the present invention.
FIG. 8 is a perspective view illustrating a positive electrode seating table of the electrode assembly manufacturing apparatus according to the embodiment of the present invention.
FIG. 9 is a perspective view illustrating a negative electrode seating table of the electrode assembly manufacturing apparatus according to the embodiment of the present invention.
FIG. 10 is a perspective view illustrating a first suction head of the electrode assembly manufacturing apparatus according to the embodiment of the present invention.
FIG. 11 is a bottom plan view illustrating the first suction head of the electrode assembly manufacturing apparatus according to the embodiment of the present invention.
FIG. 12 is a top plan view illustrating a holding mechanism and the stack table of the electrode assembly manufacturing apparatus according to the embodiment of the present invention.

### [Explanation of Reference Numerals and Symbols]

1: Electrode pick-up part
2: First electrode disposed at uppermost side among stacked electrodes
3: Second electrode adjoining first electrode
4: Plurality of other electrodes
7: Magazine part
10: Electrode assembly
11: Positive electrode
11a: Positive electrode tab
12: Negative electrode
12a: Negative electrode tab
14: Separator
50: First pressing part
51: Gripper
51a: Main body
51b: Fixing part
60: Second pressing part
60a, 60b: Second pressing block
100: Electrode assembly manufacturing apparatus
110: Stack table
111: Table body
112: Stack table heater
120: Separator supply part
121: Separator heating part
122: Separator roll
130: Positive electrode supply part
131: Positive electrode seating table
132: Positive electrode heater
133: Positive electrode roll
134: First cutter
135: First conveyor belt
136: Positive electrode supply head
140: Negative electrode supply part
141: Negative electrode seating table
142: Negative electrode heater
143: Negative electrode roll
144: Second cutter
145: Second conveyor belt
146: Negative electrode supply head
150: Positive electrode stacking part
151: First suction head
151a: Vacuum suction inlet
151b: Bottom surface
152: First head heater
153: First movement part
160: Negative electrode stacking part
161: Second suction head
162: Second head heater
163: Second movement part
170: Holding mechanism
171: First holding mechanism
172: Second holding mechanism
180: Pressing part
181: First pressing block
182: Second pressing block
183, 184: Press heater
S: Stack
A: Thin air layer
A': Expanded air layer
B: Air supply part

### [Best Mode]

Hereinafter, the present invention will be described in detail so that those with ordinary skill in the art to which the present invention pertains may easily carry out the present invention. However, the present invention may be implemented in various different ways and is not limited to the embodiments described herein.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

In the present specification, the term 'p to q' means 'p or more and q or less'.

In the present specification, the term 'electrode magazine part' serves to provide a predetermined space in which electrodes are stacked, like bullets in a magazine.

In the description of the present invention, the specific descriptions of well-known related technologies will be omitted when it is determined that the specific descriptions may unnecessarily obscure the subject matter of the present invention.

An embodiment of the present invention provides an electrode supply device including: a magazine part in which a plurality of electrodes is stacked; an electrode pick-up part configured to pick up a first electrode disposed at an uppermost side among the plurality of electrodes and transfer the first electrode to a stack table; and an air supply part configured to inject air toward an upper surface of the first electrode and a lower surface of a second electrode, which adjoins the first electrode, to reduce a pressure on the upper surface of the first electrode and the lower surface of the second electrode.

In the present specification, the term 'electrode' includes an electrode and/or a semi-finished product of the electrode. In addition, the term 'electrode semi-finished product' means any semi-assembled product related to the electrode, such as a coating electrode, a rolled electrode, or a notching electrode, that is manufactured during a process of manufacturing an electrode assembly and a secondary battery including the electrode assembly. That is, in the present specification, the electrodes or the semi-finished products of the electrodes may be stacked in the magazine part.

In the present specification, the term 'electrode magazine part' serves to provide a predetermined space in which electrodes are stacked, like bullets in a magazine.

The electrode supply device according to the embodiment of the present invention is characterized by lowering pressure on an upper surface of the first electrode and a lower surface of the second electrode by using an air supply part capable of injecting air. With the above features, the pressure of the air layer existing between the first and second electrodes is made relatively high to facilitate the separation of the stacked electrodes, thereby preventing two electrodes not being separated caused by contact between the surfaces of the electrodes.

As a result, the electrode assembly manufactured by the electrode assembly manufacturing apparatus according to the embodiment of the present invention has excellent performance.

The electrode supply device according to the embodiment of the present invention may include the magazine part in which the electrodes are stacked. The magazine part serves to stack the electrodes.

The electrode supply device according to the embodiment of the present invention may include an electrode pick-up part configured to pick up a first electrode, which is disposed at an uppermost side among the electrodes stacked in the magazine part, and transfer the first electrode to a stack table.

More specifically, in the embodiment of the present invention, the electrode pick-up part may include: an electrode fixing part configured to fix the first electrode; and an electrode transfer part configured to transfer the first electrode, which is fixed by the fixing part, to a stack table.

In the embodiment of the present invention, the air supply part is installed at one side of the magazine part may include: an air injection port through which air is injected; two air outlet configured to inject air to the upper surface of the first electrode and the lower surface of the second electrode that adjoins the first electrode; and a flow path configured to connect the air injection port and the two air outlets, and the air outlet has a shape in which a diameter of the outlet gradually decreases in an air injection direction.

In the embodiment of the present invention, the electrode assembly manufacturing apparatus may further include an electrode seating table on which the electrode, which is transferred by the electrode supply device, is seated and aligned in position. The electrode seated on the electrode seating table may be stacked on the stack table by an electrode stacking part to be described below.

Another embodiment of the present invention provides an electrode assembly manufacturing apparatus, which manufactures an electrode assembly in which positive and negative electrodes are alternately disposed between folded separators, the electrode assembly manufacturing apparatus including: a positive electrode supply part configured to supply the positive electrode to a stack table; a negative electrode supply part configured to supply the negative electrode to the stack table; a separator supply part configured to supply the separator to the stack table; the stack table on which a stack, which is made by stacking the positive electrode, the separator, and the negative electrode in a shape in which the positive and negative electrodes are alternately disposed between the folded separators, is manufactured; and a pressing part configured to manufacture an electrode assembly by bonding the positive electrode, the separator, and the negative electrode by heating and pressing the stack, in which at least one of the positive electrode supply part and the negative electrode supply part includes the electrode supply device.

In the embodiment of the present invention, the positive electrode supply part includes the electrode supply device.

In the embodiment of the present invention, the negative electrode supply part includes the electrode supply device.

In the embodiment of the present invention, the positive electrode supply part and the negative electrode supply part may each include the electrode supply device.

That is, both the positive electrode supply part and the negative electrode supply part may supply the positive and negative electrodes by using the electrode supply devices according to the present invention.

In other words, the electrode assembly manufacturing apparatus according to the embodiment of the present invention may include an electrode supply part configured to supply the electrode to the stack table. The electrode supply part may include an electrode seating table on which the electrode is seated before the electrode is stacked on the stack table by the electrode stacking part. In addition, the electrode, which is transferred by the electrode supply device according to the present invention, may be seated and aligned in position on the electrode seating table. The electrode aligned in position may be stacked on the stack table by the electrode stacking part. In addition, the electrode may be a positive electrode or a negative electrode.

In the present specification, zigzag folding means that the stack is manufactured in a shape in which the positive and negative electrodes are alternately disposed between the folded separators.

In the present specification, the stack may correspond to an incomplete electrode assembly. In addition, in the present specification, the uppermost and lowermost ends of the electrode assembly may be positions corresponding to upper and lower surfaces of the stack or positions corresponding to bottom and top surfaces of an incomplete electrode assembly.

That is, in the embodiment of the present invention, the positive electrode supply part may include the positive electrode supply device, and the negative electrode supply part may include the negative electrode supply device. The positive electrode supply device and the negative electrode supply device may each be the electrode supply device according to the present invention.

In addition, in the electrode assembly manufacturing apparatus according to the embodiment of the present invention, the positive electrode supply part may include a positive electrode seating table on which the positive electrode is seated before being seated on the stack table by the positive electrode stacking part, and the negative electrode supply part may include a negative electrode seating table on which the negative electrode is seated before being stacked on the stack table by the negative electrode stacking part.

In the embodiment of the present invention, the method of moving the stack table leftward and rightward, the method of moving the separator leftward and rightward, or the method of rotating the stack table may be used to stack the positive electrode, the separator, and the negative electrode such that the positive electrode and the negative electrode are alternately disposed between the folded separators. A typical technology in the corresponding field may be applied to this configuration.

The electrode assembly manufacturing apparatus according to the embodiment of the present invention may include a stack table movement part configured to move the stack table in the leftward and rightward or a separator guide part configured to move the separator leftward and rightward. In addition, the shapes of the stack table movement part and the separator guide part are not limited as long as the stack table movement part and the separator guide part may serve to move the stack table and the separator leftward and rightward. The devices, which are typically used in the art, may be used for the stack table movement part and the separator guide part.

In the embodiment of the present invention, the pressing parts may further include the pair of pressing blocks and the pressing heaters configured to heat the pressing blocks. The pair of pressing blocks may surface-press the stack while moving in the direction in which the pair of pressing blocks faces each other, and the pressing heaters may heat the stack. In this case, in the embodiment of the present invention, the pair of pressing blocks may include the pressing heaters therein.

In the embodiment of the present invention, the stack may be heated by a heater included in the stack table.

The description of the condition of the heating/pressing step to be described below may be applied to the pressure and temperature conditions of the heating and pressing processes by the pressing part. The same applies to the time for heating and pressure to be applied (time condition).

In this case, the pressure condition means a pressure applied by the pair of pressing blocks (or the pressing block with respect to the stack table), and the temperature condition means a temperature of heat applied by a press heater or a heater included in the stack table.

In the embodiment of the present invention, the manufacturing apparatus may further include a gripper configured to fix the stack, in which the positive electrode, the separator, and the negative electrode are stacked, while the heating and pressing processes are performed by the pressing part. Specifically, the gripper may be applied to a first heating/pressing step to be described below.

In the embodiment of the present invention, the pressing parts may include the first pressing part and the second pressing part. Specifically, the first and second pressing parts may be applied to the first and second heating/pressing steps to be described below. The contents related to first and second heating/pressing steps to be described below may be applied to the heating and pressing conditions.

In the embodiment of the present invention, the first pressing part may include a pair of first pressing blocks, pressing surfaces of the pair of first pressing blocks may include grooves corresponding to a shape of the gripper, and the pressing surfaces except for the groove are provided as flat surfaces. That is, the first pressing part may be applied to the above-mentioned first heating/pressing step.

In the embodiment of the present invention, the second pressing part may include a pair of second pressing blocks, and pressing surfaces of the pair of second pressing blocks may be provided as flat surfaces. That is, the second pressing part may be applied to the above-mentioned second heating/pressing step.

The secondary battery manufacturing apparatus according to the embodiment of the present invention may further include a holding mechanism configured to grip and fix the stack during the process of manufacturing the stack.

In the present specification, the "holding mechanism" serves to grip the stack stacked on the stack table in order to stack the positive electrode or the negative electrode during the process of manufacturing the stack in which the positive electrode, the separator, and the negative electrode are stacked such that the positive electrode and the negative electrode are alternately disposed between the folded separators on the stack table. The holding mechanism is different in function from the gripper that grips the stack during the process of heating and pressing the stack. The specific process of operating the holding mechanism may be described with reference to the description of the secondary battery manufacturing method to be described below.

The embodiment of the present invention provides an electrode supply method including a step of lowering a pressure on an upper surface of a first electrode, among the electrodes stacked in the magazine part, and a pressure on a lower surface of a second electrode adjoining the first electrode, and a step of picking up the first electrode, among the electrodes stacked in the magazine part, transferring the first electrode, and supplying the first electrode to the stack table.

The electrode supply method according to the embodiment of the present invention is characterized by including the step of lowering pressure on the upper surface of the first electrode, among the electrodes stacked in the magazine part, and the pressure on the lower surface of the second electrode adjoining the first electrode. With the above features, the pressure of the air layer existing between the first electrode and the second electrode, which adjoins the first electrode, is made relatively high to facilitate the separation of the stacked electrodes, thereby preventing two electrodes not being separated caused by contact between the surfaces of the electrodes.

As a result, the electrode assembly manufactured by the electrode assembly manufacturing method according to the embodiment of the present invention has excellent performance.

In the embodiment of the present invention, the method may further include a step of stacking the electrode in the magazine part. More specifically, in the embodiment of the present invention, the method may further include a step of stacking two or more electrodes in the magazine part.

In the embodiment of the present invention, the step of picking up the first electrode, among the electrodes stacked in the magazine part, and transferring and supplying the electrode to the stack table may include a step of fixing the first electrode; and a step of transferring the fixed first electrode to the stack table.

In the embodiment of the present invention, the method may further include a step of aligning a position of the transferred electrode before the electrode is supplied to the stack table. The description of the electrode seating table may be applied to the step.

In the embodiment of the present invention, the step of lowering the pressure on the upper surface of the first electrode, among the electrodes stacked in the magazine part, and the pressure on the lower surface of the second electrode adjoining the first electrode may include a step of injecting air toward the upper surface of the first electrode, among the electrodes stacked in the magazine part, and the lower surface of the second electrode adjoining the first electrode.

Another embodiment of the present invention provides an electrode assembly manufacturing method, which manufactures an electrode assembly in which positive and negative electrodes are alternately disposed between folded separators, the electrode assembly manufacturing method including: supplying the positive electrode to a stack table; supplying the negative electrode to the stack table; supplying the separator to the stack table; manufacturing a stack by stacking the positive electrode, the separator, and the negative electrode on a stack table in a shape in which the positive and negative electrodes are alternately disposed between the folded separators; and manufacturing an electrode assembly by bonding the positive electrode, the separator, and the negative electrode by heating and pressing the stack, in which at least one of the supplying of the positive electrode to the stack table and the supplying of the negative electrode to the stack table includes the electrode supply method.

In the embodiment of the present invention, the supplying of the positive electrode to the stack table includes the electrode supply method.

In the embodiment of the present invention, the supplying of the negative electrode to the stack table includes the electrode supply method.

In the embodiment of the present invention, the supplying of the positive electrode to the stack table and the supplying of the negative electrode to the stack table each include the electrode supply method.

That is, both the supplying of the positive electrode to the stack table and the supplying of the negative electrode to the stack table may supply the positive electrode and the negative electrode by using the electrode supply method according to the present invention.

In the embodiment of the present invention, the step of manufacturing the stack by stacking the positive electrode, the separator, and the negative electrode on the stack table in a shape in which the positive and negative electrodes are alternately disposed between the folded separators may include: step S1 of stacking the negative electrode on the stack table; step S2 of stacking the separator on the stack table so that the separator covers an upper surface of the negative electrode stacked on the stack table; step S3 of stacking the positive electrode on a surface opposite to a surface of the separator, which is in contact with the negative electrode when the separator covers the upper surface of the negative electrode; step S4 of additionally supplying the separator to cover an upper surface of the positive electrode; step S5 of stacking the negative electrode on a surface of the separator, which is in contact with the positive electrode when the separator covers the upper surface of the positive electrode; and step S6 of additionally supplying the separator to cover an upper surface of the negative electrode. Steps S1 to S6 may be repeated one or more times. That is, in this case, the electrode is stacked on the stack table first.

In the embodiment of the present invention, the step of manufacturing the stack by stacking the positive electrode, the separator, and the negative electrode on the stack table in a shape in which the positive and negative electrodes are alternately disposed between the folded separators may include: step SS1 of stacking the separator on the stack table; step SS2 of the positive electrode on an upper surface of the separator; step SS3 of additionally supplying the separator to cover an upper surface of the positive electrode; step SS4 of stacking the negative electrode on a surface opposite to the surface of the separator, which is in contact with the positive electrode when the separator covers the upper surface of the positive electrode; and step SS5 of additionally supplying the separator to cover an upper surface of the negative electrode. Steps SS1 to SS5 may be repeated one or more times. That is, in this case, the separator is stacked on the stack table first.

In the embodiment of the present invention, steps S4, S6, SS3, and SS5, that is, the step of additionally supplying the separator to cover the upper surface of the positive or negative electrode may be performed by one of a method of moving the stack table leftward and rightward, a method of moving the separator leftward and rightward, and a method of rotating the stack table.

In the embodiment of the present invention, the separator may be supplied in the form of a separator sheet. That is, the separator, which is additionally supplied, may be continuously supplied. In addition, the "upper surface" may mean a surface opposite to the surface of the separator or the electrode facing the stack table.

That is, the method of moving the stack table leftward and rightward, the method of moving the separator leftward and rightward, or the method of rotating the stack table may be used to stack the positive electrode, the separator, and the negative electrode such that the positive electrode and the negative electrode are alternately disposed between the folded separators. A typical technology in the corresponding field may be applied to this configuration.

In this case, the alignment of the stack may be maintained during the process in which the stack is gripped by the holding mechanism and the positive electrode, the negative electrode, and the separator are added, and as a result, it is possible to manufacture the stack in a shape in which the positive and negative electrodes are alternately disposed between the folded separators.

In the embodiment of the present application, the electrode assembly manufacturing method may further include a heating/pressing step of heating and pressing the stack along a stacking axis.

In addition, in the embodiment of the present application, the heating/pressing step of heating and pressing the stack along the stacking axis may include: a step of moving the stack between a pair of pressing blocks including press heaters; a step of surface-pressing the stack by moving the pair of pressing blocks along the stacking axis in a direction in which the pair of pressing blocks faces each other; and a step of heating the stack by the press heater.

In addition, in the embodiment of the present application, the heating/pressing step may include a first heating/pressing step of gripping the stack with a gripper and heating and pressing the stack, and a second heating/pressing step of stopping the gripping with the gripper and heating and pressing the stack after the first heating/pressing step.

In the embodiment of the present application, the first heating/pressing step may include fixing the stack by pressing the upper surface of the stack by using the gripper, moving the stack fixed by the gripper between a pair of pressing blocks including pressing heaters, surface-pressing the fixed stack by moving the pair of pressing blocks in a direction in which the pair of pressing blocks faces each other along a stack axis of the stack, and heating the fixed stack by using the pressing heaters.

In the embodiment of the present application, the second heating/pressing step may include stopping the heating and pressing of the stack after the first heating/pressing step, spacing the gripper apart from the stack, moving the stack, which is spaced apart from the gripper, between the pair of pressing blocks including the pressing heaters, pressing the stack by moving the pair of pressing blocks in the direction in which the pair of pressing blocks faces each other along the stack axis of the stack spaced apart from the gripper, and heating the stack by using the pressing heaters.

In the embodiment of the present application, the pressing block used in the first heating/pressing step may have a groove corresponding to the gripper.

In the embodiment of the present application, the spacing of the gripper apart from the stack may include stopping the pressing of the upper surface of the stack by using the gripper, and spacing the gripper apart from the stack.

In addition, the moving of the stack between the pair of pressing blocks including the pressing heaters in the heating/pressing step (including the first and second heating/pressing steps) may include not only moving the stack but also moving the stack together with the stack table in a state in which the stack is placed on the stack table. In this case, the objects to be heated and pressed by the pair of pressing blocks and the pressing heaters may mean the stack and the stack table.

In the embodiment of the present application, the first heating/pressing step may heat and press the stack for 10 to 30 seconds under a temperature condition of 65 to 90°C and a pressure condition of 1 to 3 MPa. More particularly, the heating/pressing step may heat and press the stack for 10 to 20 seconds under a temperature condition of 65 to 75°C and a pressure condition of 1.5 to 2 MPa.

In the embodiment of the present application, the second heating/pressing step may heat and press the stack for 5 to 60 seconds under a temperature condition of 50 to 90°C and a pressure condition of 1 to 6 MPa, and particularly heat and press the stack for 5 to 30 seconds under a temperature condition of 65°C or more and 90°C or less and a pressure condition of 1.5 to 6 MPa. More particularly, the second heating/pressing step may heat and press the stack for 7 to 25 seconds under a temperature condition of 65 to 85°C and a pressure condition of 3 to 5.5 MPa.

During the heating and pressing processes that satisfy the condition, it is possible to easily bond the separator and the electrodes of the stack of the positive electrode, the separator, and the negative electrode and thus manufacture the electrode assembly with excellent performance without damaging the positive electrode, the separator, and the negative electrode.

In addition, in the embodiment of the present application, the condition of the second heating/pressing step may be applied to the temperature condition, the pressure condition, and the time condition of the heating/pressing step. That is, the heating/pressing step may heat and press the stack for 5 to 60 seconds under a temperature condition of 50 to 90°C and a pressure condition of 1 to 6 MPa, and particularly heat and press the stack for 5 to 30 seconds under a temperature condition of 65°C or more and 90°C or less and a pressure condition of 1.5 to 6 MPa. More particularly, the heating/pressing step may heat and press the stack for 7 to 25 seconds under a temperature condition of 65 to 85°C and a pressure condition of 3 to 5.5 MPa.

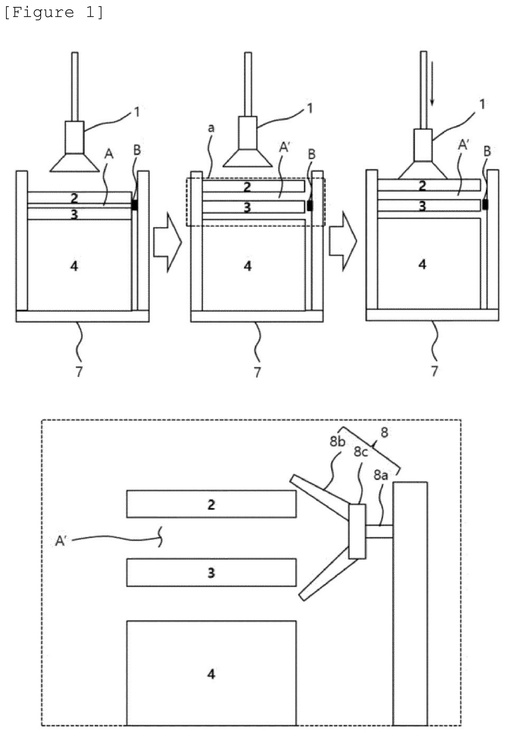

Hereinafter, a secondary battery manufacturing method and a secondary battery manufacturing apparatus according to an embodiment of the present invention will be described more specifically with reference to FIGS. 1 to 13.

FIG. 1 is a view illustrating a process of separating an electrode in an electrode supply method and an electrode supply device according to the embodiment of the present invention. As illustrated in FIG. 1, among a plurality of electrodes stacked in a magazine part 7, a first electrode 2 is stacked at an uppermost side, and second electrodes 3, which adjoins the first electrode, and the remaining plurality of electrodes 4 are stacked in the magazine part 7. In this case, an electrode pick-up part 1 picks up and transfers the first electrode 2. A thin air layer A is formed between the first electrode 2 and the second electrode 3. In this case, an air injection part B, which is installed at one side of the magazine part, may reduce a pressure on an upper surface of the first electrode and a pressure on a lower surface of the second electrode. As a result, a relatively high pressure is formed between the second electrodes 3, and thus an air layer A', in which the thin air layer A is expanded, is formed. Therefore, an interval between the first electrode 2 and the second electrode 3 in the magazine part 7 increases. In this case, the plurality of electrodes 4 and the second electrode 3 may also be partially spaced apart from one another by the injected air. Because the first electrode 2 and the second electrode 3 are spaced apart from each other at an interval, the electrode pick-up part 1 may pick up and transfer only the first electrode 2.

In addition, although not explicitly illustrated in the drawings, the air supply part 8 may include an air injection port 8a through which air may be injected, two air outlets 8b configured to inject air to an upper surface of the first electrode and a lower surface of the second electrode among the electrodes stacked in the magazine part, and a flow path 8c configured to connect the air injection port and the air outlet. The air outlet 8b may have a shape having a diameter of the air outlet 8b that gradually decreases in the air injection direction.

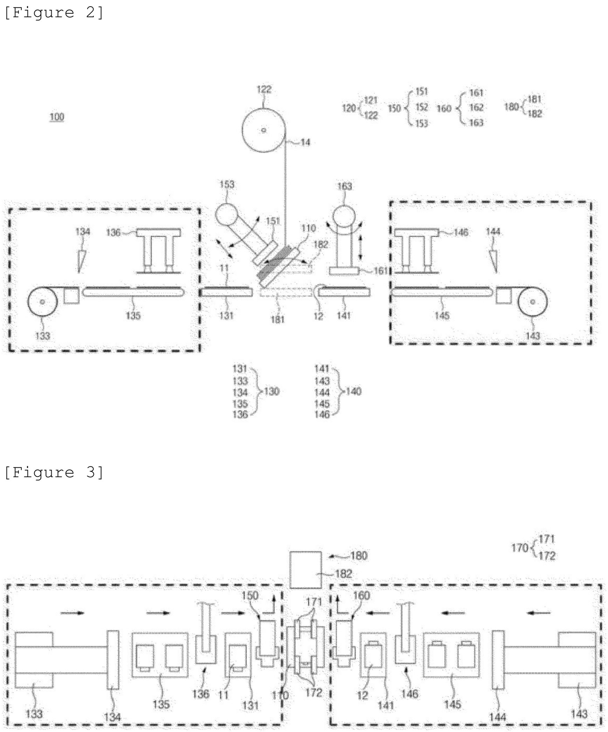

FIG. 2 is a top plan view exemplarily illustrating an electrode assembly manufacturing apparatus according to an embodiment of the present invention, and FIG. 3 is a front view illustrating a concept of the electrode assembly manufacturing apparatus according to the embodiment of the present invention. In this case, for convenience, a holding mechanism 170, which is illustrated in FIG. 3, is omitted from FIG. 2, a pressing part 180 positioned at a rear side of the top plan view is indicated by the dotted line, and a separator supply part 120 illustrated in FIG. 2 is omitted from FIG. 3. For reference, the contents described with reference to FIG. 1 may be applied to the part indicated by the dotted lines in FIGS. 2 and 3.

Referring to FIGS. 1 to 3, an electrode assembly manufacturing apparatus 100 according to the embodiment of the present invention includes a stack table 110, the separator supply part 120 configured to supply separators 14, a positive electrode supply part 130 configured to supply positive electrodes 11, a negative electrode supply part 140 configured to supply negative electrodes 12, a positive electrode stacking part 150 configured to stack the positive electrode 11 on the stack table 110, a negative electrode stacking part 160 configured to stack the negative electrode 12 on the stack table 110, and the pressing part 180 configured to bond the positive electrode 11, the separator 14, and the negative electrode 12. In addition, the electrode assembly manufacturing apparatus 100 according to the embodiment of the present invention may further include the holding mechanism 170 configured to fix the positive electrode 11 and the negative electrode 12 when the positive electrode 11 and the negative electrode 12 are stacked on the stack table 110.

In addition, in the embodiment of the present invention, the positive electrode, the separator, and the negative electrode may be supplied to the stack table while being heated.

That is, the separator supply part may supply the separator to the stack table while heating the separator. The positive electrode supply part and the negative electrode supply part may supply the positive electrode and the negative electrode to the stack table while heating the positive electrode and the negative electrode.

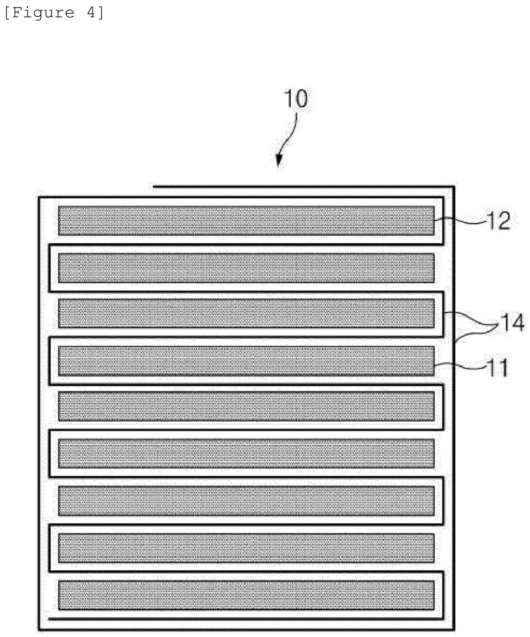

FIG. 4 is a cross-sectional view exemplarily illustrating an electrode assembly. The secondary battery according to the present invention may include an electrode assembly.

With reference to FIGS. 2 to 4, the electrode assembly manufacturing apparatus 100 according to the embodiment of the present invention refers to an apparatus for manufacturing an electrode assembly 10 by stacking the positive electrode 11, the separator 14, and the negative electrode 12.

As illustrated in FIG. 3, the electrode assembly 10 may be a power generation element that may be charged or discharged. The electrode assembly 10 may be provided in the form in which the positive electrode 11, the separator 14, and the negative electrode 12 are alternately stacked and coupled. In this case, for example, the electrode assembly 10 may be provided in the form in which the separators 14 are folded in a zigzag manner, and the positive electrodes 11 and the negative electrodes 12 are alternately disposed between the folded separators 14. In this case, as illustrated in FIG. 3, the separator 14 may surround an outermost periphery of the electrode assembly 10.

In the embodiment of the present application, the separator supply part may further include a separator roll around which the separator is wound. The separator wound around the separator roll may be supplied to the stack table while being gradually unwound. That is, the separator may be in a shape of a separator sheet.

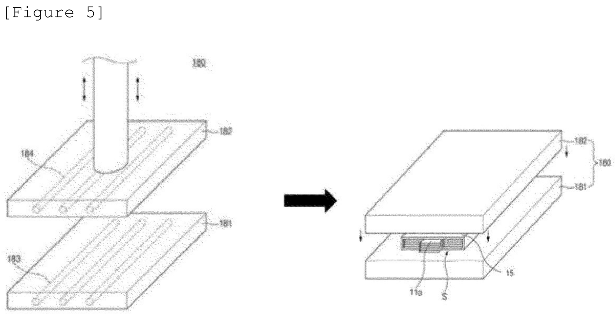

FIG. 5 is a perspective view exemplarily illustrating the pressing part of the electrode assembly manufacturing apparatus according to the embodiment of the present invention and a state in which the pressing part of the electrode assembly manufacturing apparatus according to the embodiment of the present invention presses the stack.

With reference to FIGS. 2, 3, and 5, the pressing part 180 may include a pair of pressing blocks 181 and 182 and be configured to move in a direction in which the pair of pressing blocks 181 and 182 faces each other. The stack of the positive electrode 11, the separator 14, and the negative electrode 12 may be disposed between the pressing blocks 181 and 182. Thereafter, the pressing part 180 may bond the positive electrode 11, the separator 14, and the negative electrode 12 by pressing the positive electrode 11, the separator 14, and the negative electrode 12, which are stacked on one another, while heating and pressing the stack.

Further, the pressing part 180 may further include pressing heaters 183 and 184 configured to heat the pair of pressing blocks 181 and 182, such that the pair of pressing blocks 181 and 182 may heat and press the stack.
Therefore, the positive electrode 11, the separator 14, and the negative electrode 12 in the stack may be thermally bonded more properly and more securely bonded.

Horizontal and vertical lengths of a pressing surface of each of the pair of pressing blocks 181 and 182 may be longer than horizontal and vertical lengths of the stack. Further, the pair of pressing blocks 181 and 182 may include a first pressing block 181 and a second pressing block 182. The first pressing block 181 and the second pressing block 182 may each be provided in the form of a quadrangular block having a rectangular parallelepiped shape.

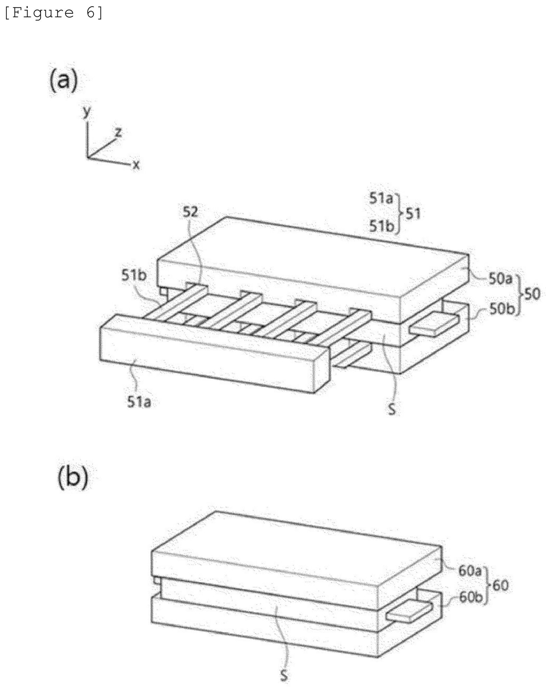

FIG. 6A is a perspective view illustrating a first pressing part 50 according to the embodiment of the present invention, and FIG. 6B is a perspective view illustrating a second pressing part 60 according to the embodiment of the present invention.

With reference to FIG. 6A, the first pressing part 50 may heat and press the stack S in a state in which the stack S is fixed by a gripper 51. The first pressing part 50 includes a pair of first pressing blocks 50a and 50b. All the pressing surfaces of the pair of first pressing blocks 50a and 50b may be provided as flat surfaces, except for a groove corresponding to a fixing part 51b of the gripper 51.

The gripper 51 may include: a main body 51a provided to correspond to a length x and a height y of the stack S or larger than the length x and the height y of the stack S, and the plurality of fixing parts 51b provided on one surface of the main body 51a and provided in a column or plate shape in a direction of a width z of the stack S. In this case, the length x of the stack S may mean a longest distance between one end and the other end of the stack S. The height y may mean a distance in a stacking direction of the stack S. A width z may mean a distance traversing the upper surface of the stack S.

The position of the fixing part 51b may be adjusted in the height direction of the main body 51a. The fixing part 51b may fix the stack S by coming into contact with the upper and lower surfaces of the stack S. Thereafter, the pair of first pressing blocks 50a and 50b included in the first pressing part 50 may bond the electrodes and the separator, which are included in the stack S, by surface-pressing any one of or both the stack S and the gripper 51 while moving in the direction in which the pair of first pressing blocks 50a and 50b faces each other.

With reference to FIG. 6B, the second pressing part 60 may finally heat and press the stack S primarily heated and pressed by the first pressing part 50. The second pressing part 60 may include a pair of second pressing blocks 60a and 60b, and a pair of pressing blocks 61 and 62 may surface-press the stack S while moving in the direction in which the pair of second pressing blocks 60a and 60b faces each other. In addition, all the pressing surfaces of the pair of second pressing blocks 60a and 60b included in the second pressing part 60, which come into contact with and press the stack S, may be provided as flat surfaces.

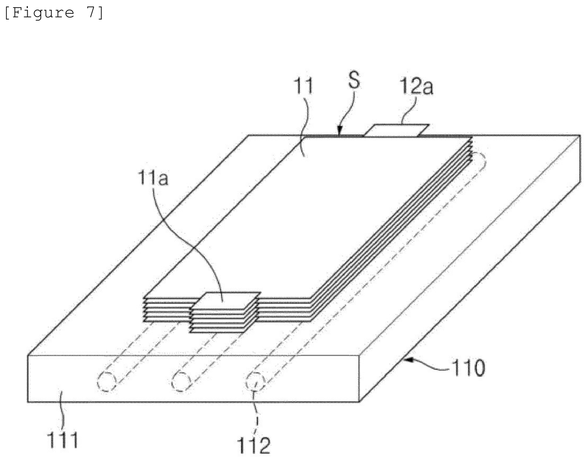

FIG. 7 is a perspective view illustrating the stack table of the electrode assembly manufacturing apparatus according to the embodiment of the present invention.

With reference to FIGS. 2, 3, and 7, the positive electrode 11, the separator 14, and the negative electrode 12 may be stacked on the stack table 110 so that the positive electrode 11 and the negative electrode 12 are alternately disposed between the folded separators 14.

In addition, the stack table 110 may include a table body 111 on which the positive electrode 11, the separator 14, and the negative electrode 12 are stacked, and a stack table heater 112 configured to heat the stacked stack S by heating the table body 111.

The positive electrode 11 may be configured as a positive electrode, and the negative electrode 12 may be configured as a negative electrode, but the present invention is not necessarily limited thereto. For example, the positive electrode 11 may be configured as a negative electrode, and the negative electrode 12 may be configured as a positive electrode.

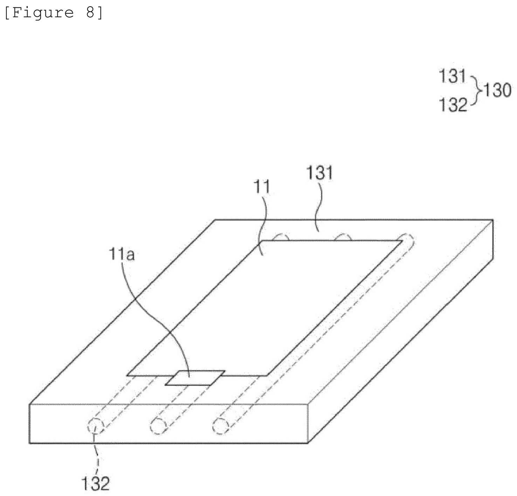

FIG. 8 is a perspective view illustrating a positive electrode seating table of the electrode assembly manufacturing apparatus according to the embodiment of the present invention.

With reference to FIGS. 2, 3, and 8, the positive electrode supply part 130 may supply the positive electrode 11 to the positive electrode stacking part 150 while heating the positive electrode 11.

In addition, the positive electrode supply part 130 may include a positive electrode seating table 131 on which the positive electrode 11 is seated before the positive electrode 11 is stacked on the stack table 110 by the positive electrode stacking part 150, and a positive electrode heater 132 configured to heat the positive electrode 11 by heating the positive electrode seating table 131.

Meanwhile, the positive electrode supply part 130 may further include the positive electrode roll 133 around which the positive electrode 11 is wound in the form of a sheet, a first cutter 134 configured to form the positive electrode 11 having a predetermined size by cutting the positive electrode 11 at a predetermined interval when the positive electrode 11 wound in the form of the sheet around the positive electrode roll 133 is unwound and supplied, a first conveyor belt 135 configured to move the positive electrode 11 cut by the first cutter 134, and a positive electrode supply head 136 configured to suck the positive electrode 11, which is conveyed by the first conveyor belt 135, by vacuum and seat the positive electrode 11 on the positive electrode seating table 131. In this case, the first cutter 134 may cut the positive electrode 11 in the form of a sheet so that a positive electrode tab 11a protrudes from the end of the positive electrode 11.

In this case, the cut positive electrodes 11 may be stacked in a positive electrode magazine. The contents described with reference to FIG. 1 may be applied to a method of picking up the positive electrode 11 stacked in the positive electrode magazine.

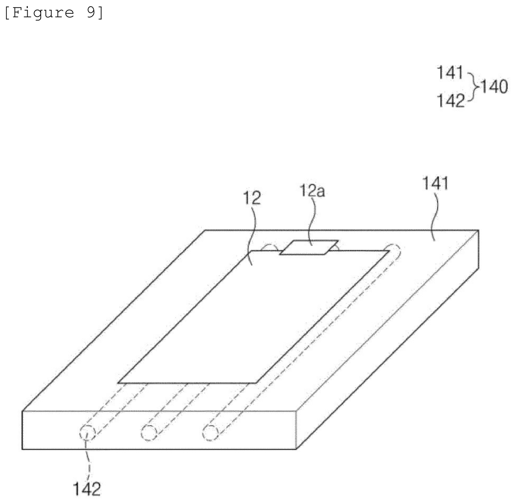

FIG. 9 is a perspective view illustrating a negative electrode seating table of the electrode assembly manufacturing apparatus according to the embodiment of the present invention.

With reference to FIGS. 2, 3, and 9, the negative electrode supply part 140 may supply the negative electrode 12 to the negative electrode stacking part 160 while heating the negative electrode 12.

In addition, the negative electrode supply part 140 may include a negative electrode seating table 141 on which the negative electrode 12 is seated before the negative electrode 12 is stacked on the stack table 110 by the negative electrode stacking part 160, and a negative electrode heater 142 configured to heat the negative electrode 12 by heating the negative electrode seating table 141.

Meanwhile, the negative electrode supply part 140 may further include a negative electrode roll 143 around which the negative electrode 12 is wound in the form of a sheet, a second cutter 144 configured to form the negative electrode 12 having a predetermined size by cutting the negative electrode 12 at a predetermined interval when the negative electrode 12 wound in the form of a sheet around the negative electrode roll 143 is unwound and supplied, a second conveyor belt 145 configured to convey the negative electrode 12 cut by the second cutter 144, and the negative electrode supply head 146 configured to suck the negative electrode 11, which is conveyed by the second conveyor belt 145, by vacuum and seat the negative electrode 11 on the negative electrode seating table 141. In this case, the second cutter 144 may cut the negative electrode 12 in the form of a sheet so that a negative electrode tab 12a protrudes from the end of the negative electrode 12.

In this case, the cut negative electrodes 12 may be stacked in a negative electrode magazine. The contents described with reference to FIG. 1 may be applied to a method of picking up the negative electrode 12 stacked in the negative electrode magazine.

In the embodiment of the present invention, the positive electrode stacking part may include a first suction head configured to suck the positive electrode seated on the positive electrode seating table by vacuum. The negative electrode stacking part may include the second suction head configured to suck the negative electrode seated on the negative electrode seating table by vacuum.

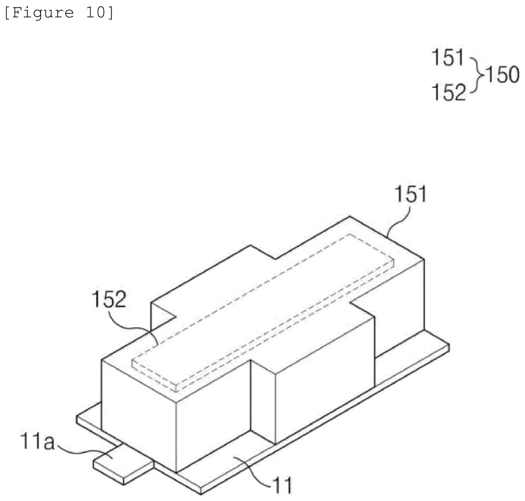

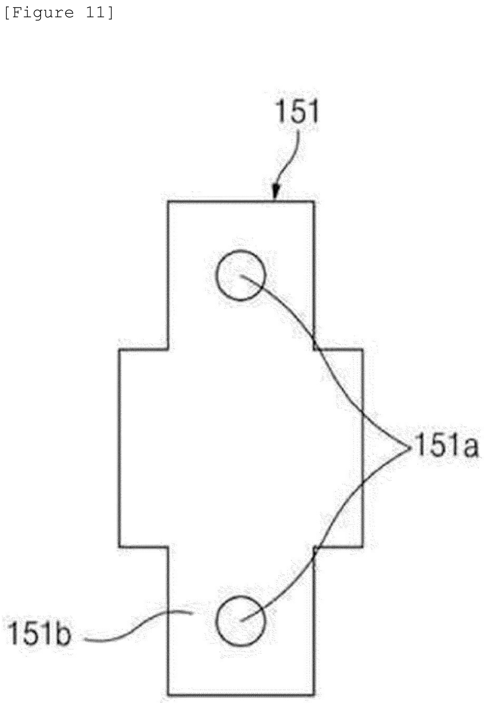

FIG. 10 is a perspective view illustrating the first suction head of the electrode assembly manufacturing apparatus according to the embodiment of the present invention, and FIG. 11 is a bottom plan view illustrating the first suction head of the electrode assembly manufacturing apparatus according to the embodiment of the present invention.

With reference to FIGS. 2, 3, 10, and 11, the positive electrode stacking part 150 may stack the positive electrode 11 on the stack table 110.

In addition, the positive electrode stacking part 150 may include a first suction head 151 and a first movement part 153.

The first suction head 151 may suck, by vacuum, the positive electrode 11 seated on the positive electrode seating table 131. In this case, the first suction head 151 has a vacuum inlet 151a formed in a bottom surface 151b and sucks the positive electrode 11 through the vacuum inlet 151a, thereby fixing the positive electrode 11 on the bottom surface 151b of the first suction head 151. In this case, the first suction head 151 may have therein a passageway that connects the vacuum inlet 151a and a vacuum suction device (not illustrated).

The first movement part 153 may move the first suction head 151 to the stack table 110 so that the first suction head 151 may stack the positive electrode 11, which is seated on the positive electrode seating table 131, on the stack table 110.

In addition, the negative electrode stacking part 160 may stack the negative electrode 12 on the stack table 110. In this case, the negative electrode stacking part 160 may have the same structure as the positive electrode stacking part 150. In this case, the negative electrode stacking part 160 may include the second suction head 161 and a second movement part 163.

The second suction head 161 may suck, by vacuum, the negative electrode 12 seated on the negative electrode seating table 141. In this case, the second movement part 163 may move the second suction head 161 to the stack table 110 so that the second suction head 161 may stack the negative electrode 12, which is seated on the negative electrode seating table 141, on the stack table 110.

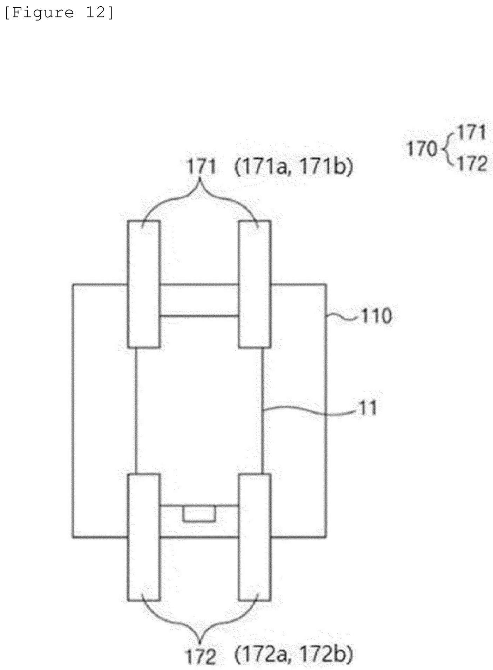

FIG. 12 is a top plan view illustrating a holding mechanism and the stack table of the electrode assembly manufacturing apparatus according to the embodiment of the present invention.

With reference to FIGS. 2, 3, and 12, the holding mechanism 170 may hold and fix the positive electrode 11 or the negative electrode 12 to the stack table 110 at the time of stacking the positive electrode 11 or the negative electrode 12 on the stack table 110.

In addition, the holding mechanism 170 may press and fix the upper surface of the positive electrode 11 stacked at the uppermost side of the stack table 110 at the time of stacking the positive electrode 11 on the stack table 110 and press and fix the upper surface of the negative electrode 12 stacked at the uppermost side of the stack table 110 at the time of stacking the negative electrode 12 on the stack table 110. In addition, the holding mechanism 170 may fix the stack by pressing the upper surface of the stack including the positive electrode 11, the separator 14, and the negative electrode 12 stacked on the stack table 110.

That is, at the time of forming the stack so that the positive electrodes 11 and the negative electrodes 12 are stacked to be positioned between the separators 14, the holding mechanism 170 may hold the stack by pressing the surface positioned at the uppermost side of the stack in the direction toward the stack table 110, thereby preventing the stack from separating from the stack table 110.

Meanwhile, for example, the holding mechanism 170 may include a first holding mechanism 171 and a second holding mechanism 172 and fix two opposite sides of the positive electrode 11 or the negative electrode 12.

Further, an example will be described in which the zigzag folding process is performed as the stack table 110 rotates as described above. When the stack table 110 rotates after the holding mechanism 170 holds the positive electrode 11 or the negative electrode 12, the separator 14 may be unwound from the separator roll 122 in proportion to the rotation amount of the stack table 110 and supplied to the stack table 110.

Meanwhile, for example, the holding mechanism 170 and the stack table 110 may be connected or coupled to a rotation device (not illustrated). In this case, when the holding mechanism 170 holds the positive electrode 11 or the negative electrode 12, the rotation device may rotate the holding mechanism 170 and the stack table 110.

Thereafter, when the positive electrode 11 and the negative electrode 12 are completely stacked between the separators 14, the gripper may fix the stack and move the stack to the pressing part, and then the pressing part may press and heat the stack.

In the embodiment of the present invention, the manufacturing apparatus may further include a rotation part configured to rotate the stack table. The positive electrode stacking part is provided at one side of the rotation part, and the negative electrode stacking part is provided at the other side of the rotation part, such that the separator may be folded in a zigzag manner so as to be positioned between the positive electrode and the negative electrode. The rotation part may alternately perform the operation of rotating the stack table toward one side to allow the stack table to face the first suction head of the positive electrode stacking part at the time of stacking the positive electrode and the operation of rotating the stack table toward the other side to allow the stack table to face the second suction head of the negative electrode stacking part at the time of stacking the negative electrode.

An electrode assembly manufacturing apparatus according to another embodiment of the present invention may further include a vision device configured to perform the vision inspect on the positive electrode or the negative electrode.

The electrode assembly manufacturing apparatus according to another embodiment of the present invention may further include the rotation part configured to rotate the stack table, and a vision device configured to perform a vision inspection on the positive electrode and the negative electrode.

The electrode assembly manufacturing apparatus according to another embodiment of the present invention may include a stack table movement part configured to move the stack table leftward and rightward or a separator guide part configured to move the separator leftward and rightward and further include the vision device configured to perform the vision inspection on the positive electrode and the negative electrode. The shapes of the stack table movement part and the separator guide part are not limited as long as the stack table movement part and the separator guide part may serve to move the stack table and the separator leftward and rightward. The devices, which are typically used in the art, may be used for the stack table movement part and the separator guide part.

In the embodiment of the present invention, the manufacturing apparatus may include the stack table movement part configured to move the stack table leftward and rightward. The positive electrode stacking part is provided at one side of the stack table, and the negative electrode stacking part is provided at the other side of the stack table, such that the separator may be folded in a zigzag manner so as to be positioned between the positive electrode and the negative electrode. The stack table movement part may alternately perform the operation of moving the stack table toward one side to allow the stack table to face the first suction head of the positive electrode stacking part at the time of stacking the positive electrode and the operation of moving the stack table toward the other side to allow the stack table to face the second suction head of the negative electrode stacking part at the time of stacking the negative electrode.

In the embodiment of the present invention, the manufacturing apparatus includes the separator guide part configured to move the separator leftward and rightward. The separator guide part may repeatedly perform the operation of moving the separator, which is supplied to the stack table, leftward and rightward so that the separator may be folded in a zigzag manner so as to be positioned between the positive electrode and the negative electrode.

That is, the electrode assembly manufacturing apparatus according to the embodiment of the present invention may further include an additional constituent element in accordance with the method of moving the stack table or the method of supplying the separator.

In the embodiment of the present invention, the vision device may include a first camera and a second camera. The first camera may capture an image of the positive electrode seated on the positive electrode seating table of the positive electrode supply part, and the second camera may capture an image of the negative electrode seated on the negative electrode seating table of the negative electrode supply part. It is possible to inspect the stacking quality of the positive electrode and the negative electrode on the basis of image information acquired by the first camera and the second camera. More specifically, it is possible to inspect seating position, sizes, stacked states, and the like of the positive electrode and the negative electrode.

In the embodiment of the present invention, the positive electrode may be a positive electrode, and the negative electrode may be a negative electrode. On the contrary, the positive electrode may be a negative electrode, and the negative electrode may be a positive electrode.

In the present specification, the description of the electrode assembly manufacturing apparatus may be applied to the electrode assembly manufacturing method and the electrode assembly, and vice versa.

In addition, in the embodiment of the present invention, for example, the positive electrode is manufactured by coating a positive electrode current collector with a mixture of a positive electrode active material, a conductive material, and a binder and then drying the mixture. As necessary, a filler is sometimes added to the mixture. In this case, any material commonly used in the art may be used.

Specifically, examples of the positive electrode active material may include: a layered compound such as lithium cobalt oxide (LiCoO₂), lithium nickel oxide (LiNiO₂) or a compound substituted with one or more transition metals; lithium manganese oxide (LiMnO₂), such as a formula Li₁₊ₓMn₂₋ₓO₄ (where x is 0 to 0.33), LiMnO₃, LiMn₂O₃, LiMnO₂; lithium copper oxide (Li₂CuO₂); vanadium oxide such as LiV₃O₈, LiFe₃O₄, V₂O₅, Cu₂V₂O₇; lithiated nickel oxide represented by the formula LiNi₁₋ₓMₓO₂ (where M=Co, Mn, Al, Cu, Fe, Mg, B or Ga, and x=0.01 to 0.3); lithium manganese composite oxide represented by the formula LiMn₂₋ₓMₓO₂ (where M=Co, Ni, Fe, Cr, Zn or Ta, and x=0.01 to 0.1) or Li₂Mn₃MO₈ (where M=Fe, Co, Ni, Cu or Zn); or LiMn₂O₄ in which a part of lithium is substituted with an alkaline earth metal ion; disulfide compounds; Fe₂(MoO₄)₃. However, the present invention is not limited thereto.

Specifically, the positive electrode current collector is not particularly limited as long as the positive electrode current collector has high conductivity without causing a chemical change in the battery. For example, the positive electrode current collector may be made of stainless steel, aluminum, nickel, titanium, sintered carbon, or aluminum, or made of stainless steel having a surface treated with carbon, nickel, titanium, silver, or the like, and particularly, aluminum. Fine irregularities may be formed on a surface of the current collector in order to increase adhesion of the positive electrode active material. Various structure, such as a film, a sheet, a foil, a net, a porous body, a foam body, and a non-woven body, may be adopted. In addition, the positive electrode current collector may generally have a thickness of 3 µm to 500 µm.

The conductive material may be generally added in an amount of 1 to 50 wt% of the total weight of the mixture including the positive electrode active material. The conductive material is not particularly limited as long as the conductive material has conductivity without causing a chemical change in the battery. For example, conductive materials selected from: graphite such as natural graphite and artificial graphite; carbon black such as carbon black, acetylene black, Ketjen black, channel black, furnace black, lamp black, and thermal black; conductive fibers such as carbon fibers and metal fibers; metal powders such as carbon fluoride, aluminum, and nickel powder; conductive whiskeys such as zinc oxide and potassium titanate; conductive metal oxides such as titanium oxide; polyphenylene derivatives, and the like may be used as the conductive material.

The binder is a component that assists in coupling the active material and the conductive material and coupling the current collector. Typically, the binder of 1 to 50 wt% is added based on the total weight of the mixture including the positive electrode active material. Examples of the binder may include polyvinylidene fluoride, polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene butadiene rubber (SBR), fluoro-rubber, and various copolymers thereof.

The filler is optionally used as a component to suppress the expansion of the positive electrode. The filler is not particularly limited as long as the filler is a fibrous material that does not cause a chemical change in the battery. For example, olefin polymers, such as polyethylene and a polypropylene, and fibrous materials, such as glass fiber and carbon fiber, are used.

In addition, in the embodiment of the present invention, the negative electrode may be manufactured by coating, drying, and pressing a negative electrode active material on a negative electrode current collector, and if necessary, the conductive materials, binders, fillers, and the like discussed above may be optionally further included. Even in this case, any material commonly used in the art may be used.

Specifically, as the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni based material.

The negative electrode current collector is not particularly limited as long as the negative electrode current collector exhibits conductivity without inducing any chemical change in a battery. For example, the negative electrode current collector may be made of copper, stainless steel, aluminum, nickel, titanium, or sintered carbon, or made of copper or stainless steel having a surface treated with carbon, nickel, titanium, or silver. Alternatively, the negative electrode current collector may be made of an aluminum-cadmium alloy. In addition, the negative electrode current collector may have a micro-scale uneven pattern formed on the surface thereof so as to increase a binding force of the negative electrode active material in the same manner as the positive electrode current collector. The negative electrode current collector may be configured in any various forms, such as a film, a sheet, a foil, a net, a porous body, a foam body, and a non-woven fabric body. In addition, the negative electrode current collector may have a thickness generally in a range of 3 µm to 500 µm.

In the embodiment of the present invention, the separator may be an organic/inorganic complex porous safety-reinforcing separator (SRS). The SRS may have a structure in which a coating layer component including inorganic particles and a binder polymer is coated on a polyolefin-based separator substrate.

Because the SRS does not undergo high-temperature thermal contraction due to the heat resistance of the component inorganic particles, even if the electrode assembly is penetrated by a needle-shaped conductor, an elongated length of the safety separator can be maintained.

The SRS may have a uniform porous structure formed by an interstitial volume between the inorganic particles that are components of the coating layer, in addition to the porous structure of the separator substrate itself. The pores may not only significantly alleviate any external impacts applied to the electrode assembly but may also facilitate the movement of lithium ions through the pores, as well as enable a large amount of electrolyte to be impregnated into the separator, thereby promoting improved performance of the battery.

In the embodiment of the present invention, the separator has separator surplus portions extending toward both sides beyond the width of the positive and negative electrodes in the width direction. A coating layer thicker than the thickness of the separator is formed on one or both sides of the separator in order to prevent shrinkage of the separator.

In the embodiment of the present invention, each separator surplus portion may have a size of 5% to 12% of the width of the separator.

In the embodiment of the present invention, the coating layer may be coated on both surfaces of the separator over a width of 50% to 90% of the width of each separator surplus portion. In addition, the widths of the coating layers may be the same or different on each surface of the separator.

In the embodiment of the present invention, the coating layer may include inorganic particles and a binder polymer as components.

In the embodiment of the present invention, examples of the polyolefin-based separator component may include high-density polyethylene, linear low-density polyethylene, low-density polyethylene, ultra-high molecular weight polyethylene, polypropylene, or derivatives thereof.

In the embodiment of the present invention, the thickness of the coating layer may be smaller than the thickness of the positive electrode or the negative electrode. In a specific example, the thickness of the coating layer may be 30% to 99% of the thickness of the positive electrode or the negative electrode.

In the embodiment of the present invention, the coating layer may be formed by wet coating or dry coating.

In the embodiment of the present invention, the polyolefin-based separator substrate and the coating layer may exist in a form in which pores on the surface of the substrate and the coating layer are anchored with each other, whereby the separator substrate and the active layer may be bonded together firmly. In this case, the substrate and the active layer may have a thickness ratio of 9:1 to 1:9, specifically, a thickness ratio of 5:5, in consideration of the physical coupling force and the pore structure present on the separator.

In the embodiment of the present invention, the inorganic particles may be inorganic particles commonly used in the art. The inorganic particles may form empty space among inorganic particles and thereby may form micro pores and maintain a physical shape as a spacer. In addition, because the inorganic particles generally have properties that do not change their physical properties even at high temperatures of 200°C or more, the resultant organic/inorganic complex porous film generally and desirably has excellent heat resistance.

In addition, the inorganic particles are not specifically limited as long as inorganic particles are electrochemically stable. That is, the inorganic particles used in the present invention are specifically limited as long as oxidation and reduction reactions do not occur in an operating voltage range (namely, 0 to 5 V based on Li/Li⁺) of a used battery. In particular, when inorganic particles having ion delivery ability are used, performance may be improved by raising ionic conductivity in an electrochemical device. Therefore, inorganic particles having high ionic conductivity, which is possible, are preferable. In addition, when the inorganic particles have high density, it is difficult to disperse during coating but also, when a battery is manufactured, the weight of the battery is increased. Therefore, inorganic particles having low density, which is possible, are preferable. In addition, when the inorganic particles have a high dielectric constant, a dissociation degree of an electrolyte salt in a liquid electrolyte, namely, a lithium salt, is increased and thereby ionic conductivity of an electrolyte may be improved.

For the foregoing reasons, the inorganic particles may be one or more selected from a group consisting of inorganic particles having piezoelectricity and inorganic particles having lithium ion transfer ability.

The piezoelectric inorganic particles mean a material which is a nonconductor at normal pressure. However, when a certain pressure is applied thereto, an internal structure is changed and thereby has conductivity. In particular, the piezoelectric inorganic particles exhibit high dielectric constant characteristics having a dielectric constant of 100 or more and have a potential difference between both faces in which one face is charged by a negative electrode and the other face is charged by a positive electrode by electric charge generated when particles are tensioned or compressed by a certain pressure.

When inorganic particles having the above characteristics are used as a coating layer ingredient, internal short-circuit in both electrodes due to external shock such as a needle-shaped conductor may occur, and thereby a negative electrode and a positive electrode may not directly contact one another due to inorganic particles coated on a separator and potential differences among particles may occur due to piezoelectricity of inorganic particles. Accordingly, electron migration, namely, fine current flow, is achieved between both electrodes and thereby battery voltage is gradually reduced, and, accordingly, stability may be improved.

The inorganic particles having piezoelectricity may be, for example, one or more selected from a group consisting of BaTiO₃, Pb (Zr, Ti)O₃ (PZT), Pb₁₋ₓLaₓZr_{1-y}Ti_{y}O₃ (PLZT), Pb(Mg₃Nb_{2/3})O₃-PbTiO₃ (PMN-PT) hafnia (HfO₂), but the present invention is not limited thereto.

The inorganic particles having the lithium ion transfer ability indicate inorganic particles which contain lithium elements, do not save lithium, and transport lithium ions. The inorganic particles having the lithium ion transfer ability may transfer and transport ions by a defect present in a particle structure, and thereby lithium ionic conductivity in a battery is improved, and, accordingly, battery performance may be improved.

The inorganic particles having the lithium ion transfer ability may be, for example, one or more selected from a group consisting of lithium phosphate (Li₃PO₄), lithium titanium phosphate (LiₓTi_{y}(PO₄)₃, where 0<x<2 and 0<y<3), lithium aluminum titanium phosphate (LiₓAl_{y}Ti_{z}(PO₄)₃, where 0<x<2, 0<y<1, and 0<z<3), (LiAlTiP)ₓO_{y}-based glass (where 0<x<4 and 0<y<13), lithium lanthanum titanate (LiₓLa_{y}TiO₃, where 0<x<2 and 0<y<3), lithium germanium thio phosphate (LiₓGe_{y}P_{z}S_{w}, where 0<x<4, 0<y<1, 0<z<1, and 0<w<5), lithium nitride (LiₓN_{y}, where 0<x<4 and 0<y<2), SiS₂-based glass (LiₓSi_{y}S_{z}, where 0<x<3, 0<y<2, and 0<z<4), and P₂S₅-based glass (LiₓP_{y}S_{z}, where 0<x<3, 0<y<3, and 0<z<7), but the present invention is not limited thereto.

A composition ratio of inorganic particles and a binder polymer as the coating layer ingredient is not greatly limited and may be controlled in a range of 10:90 to 99:1 wt%, preferably 80:20 to 99:1 wt%. When the composition ratio is less than 10:90 wt%, the amount of polymer is excessively increased and thereby pore sizes and porosity are reduced due to reduction of interstitial volume formed among inorganic particles, and, accordingly, final battery performance is deteriorated. On the contrary, when the composition ratio exceeds 99:1 wt%, the amount of a polymer is too low and thereby adhesive strength among inorganic matters is weakened, and, accordingly, mechanical properties of a final organic/inorganic composite porous separator may be deteriorated.

In the embodiment of the present invention, the binder polymer may be any binder polymer commonly used in the art.

The coating layer of the organic/inorganic composite porous separator may include other conventionally known additives, in addition to the inorganic particles and the binder polymer described above.

In the embodiment of the present invention, the coating layer may also be referred to as an active layer.

While the present invention has been described with reference to the specific embodiments, the specific embodiments are only for specifically explaining the present invention, and the electrode assembly manufacturing apparatus according to the present invention is not limited to the specific embodiments. The present invention may be variously carried out by those skilled in the art without departing from the technical spirit of the present invention.

## Claims

1. An electrode supply device comprising:
a magazine part in which a plurality of electrodes is stacked;
an electrode pick-up part configured to pick up a first electrode disposed at an uppermost side among the plurality of electrodes; and
an air supply part configured to inject air toward an upper surface of the first electrode and a lower surface of a second electrode, which adjoins the first electrode, to reduce a pressure on the upper surface of the first electrode and the lower surface of the second electrode.

2. The electrode supply device of claim 1, wherein the electrode pick-up part comprises:
an electrode fixing part configured to fix the first electrode; and
an electrode transfer part configured to transfer the first electrode, which is fixed by the fixing part, to a stack table.

3. The electrode supply device of claim 1, wherein the air supply part comprises:
an air injection port through which air is injected;
two air outlets configured to inject air to the upper surface of the first electrode and the lower surface of the second electrode; and
a flow path configured to connect the air injection port and the air outlet, and
wherein the air outlet has a shape in which a diameter of the flow path gradually decreases in an air injection direction.

4. An electrode assembly manufacturing apparatus, which manufactures an electrode assembly in which positive and negative electrodes are alternately disposed between folded separators, the electrode assembly manufacturing apparatus comprising:
a positive electrode supply part configured to supply the positive electrode to a stack table;
a negative electrode supply part configured to supply the negative electrode to the stack table;
a separator supply part configured to supply the separator to the stack table;
the stack table on which a stack, which is made by stacking the positive electrode, the separator, and the negative electrode in a shape in which the positive and negative electrodes are alternately disposed between the folded separators, is manufactured; and
a pressing part configured to manufacture an electrode assembly by bonding the positive electrode, the separator, and the negative electrode by heating and pressing the stack,
wherein at least one of the positive electrode supply part and the negative electrode supply part comprises the electrode supply device according to any one of claims 1 to 3.

5. An electrode supply method comprising:
lowering a pressure on an upper surface of a first electrode, which is disposed at an uppermost side among a plurality of electrodes stacked in a magazine part, and a pressure on a lower surface of a second electrode adjoining the first electrode by injecting air toward the upper surface of the first electrode and the lower surface of the second electrode; and
picking up the first electrode.

6. The electrode supply method of claim 5, wherein the picking up of the first electrode to transfer and supply the electrode to a stack table comprises:
fixing the first electrode; and
transferring the fixed first electrode to the stack table.

7. The electrode supply method of claim 5, wherein the lowering of the pressure on the upper surface of the first electrode and the pressure on the lower surface of the second electrode comprises:
injecting air toward the upper surface of the first electrode and the lower surface of the second electrode.

8. An electrode assembly manufacturing method, which manufactures an electrode assembly in which positive and negative electrodes are alternately disposed between folded separators, the electrode assembly manufacturing method comprising:
supplying the positive electrode to a stack table;
supplying the negative electrode to the stack table;
supplying the separator to the stack table;
manufacturing a stack by stacking the positive electrode, the separator, and the negative electrode on a stack table in a shape in which the positive and negative electrodes are alternately disposed between the folded separators; and
manufacturing an electrode assembly by bonding the positive electrode, the separator, and the negative electrode by heating and pressing the stack,
wherein at least one of the supplying of the positive electrode to the stack table and the supplying of the negative electrode to the stack table comprises the electrode supply method according to any one of claims 5 to 7.
